# EUROPÄISCHE PATENTSCHRIFT

(11) **EP 2 888 113 B1**
(45) Veröffentlichungstag und Bekanntmachung des Hinweises auf die Patenterteilung: **21.02.2018**
(21) Anmeldenummer: 13782936.2
(22) Anmeldetag: 21.08.2013
(51) Int. Cl.: B41M 7/00, C09D 11/101, C09D 11/322, C09D 11/36

(54) **ELEKTRONENSTRAHLHÄRTBARE INKJET-TINTEN UND DEREN VERWENDUNG IN INKJET-DRUCKVERFAHREN**
ELECTRON BEAM-CURABLE INKJET INKS AND USE THEREOF IN INKJET PRINTING METHODS
ENCRES POUR IMPRESSION À JET D'ENCRE DURCISSABLES PAR FAISCEAU ÉLECTRONIQUE ET LEUR UTILISATION DANS DES PROCÉDÉS D'IMPRESSION À JET D'ENCRE

(30) Priorität: 24.08.2012 DE 102012016690
(43) Veröffentlichungstag der Anmeldung: 01.07.2015
(73) Patentinhaber: Mankiewicz Gebr. & Co. GmbH & Co. KG, 21107 Hamburg (DE)
(72) Erfinder: DE ROSSI, Umberto, 22844 Norderstedt (DE); BOLENDER, Oliver, 20251 Hamburg (DE)
(86) Internationale Anmeldenummer: PCT/DE2013/000468
(87) Internationale Veröffentlichungsnummer: WO 2014/029381

(56) Entgegenhaltungen:
- EP-A1- 2 053 101
- EP-A2- 1 908 528
- EP-A2- 2 133 210
- WO-A1-2005/061634
- DE-A1-102008 063 837
- DATABASE WPI Week 200445 Thomson Scientific, London, GB; AN 2004-470661 XP002721319, -& JP 2004 098309 A (TOYO INK MFG CO LTD) 2. April 2004 (2004-04-02)
- DATABASE WPI Week 201255 Thomson Scientific, London, GB; AN 2011-M47853 XP002721320, & CN 102 174 283 A (BEIJING LIBO TAIYE TECHNOLOGY CO LTD) 7. September 2011 (2011-09-07) -& DATABASE CA [Online] CHEMICAL ABSTRACTS SERVICE, COLUMBUS, OHIO, US; 13. September 2011 (2011-09-13), LIANG, PENGZONG ET AL: "Nanometer UV-curable ink-jet spray colorant paste and its preparation method", XP002721321, gefunden im STN Database accession no. 2011:1147081

## Beschreibung

Die Erfindung betrifft elektronenstrahlhärtbare Tinten und Verfahren zur Applikation und Aushärtung der Tinten mittels Inkjet-Technologie sowie die Verwendung dieser Tinten zur Bedruckung von Substraten, insbesondere von Kunststofffolien für Lebensmittelverpackungen.

Unter Inkjet-Technologie versteht man Druckverfahren, bei denen durch den gezielten Abschuss oder das Ablenken kleiner Tintentröpfchen ein Druckbild erzeugt wird. Diese Verfahren sind seit mehreren Jahren im grafischen Markt im Einsatz. Eingesetzt werden hierbei vor allem wasser- und lösemittelbasierte Tinten sowie UV-härtende Tinten. Tinten auf Wasser- oder Lösemittelbasis trocknen in der Regel unter Abdampfen des Lösemittels. UV-härtende Tinten trocknen über einen Aushärtungsprozess, welcher durch UV-Strahlung initiiert wird. Dazu werden die UV-härtende Tinten kurz nach dem Auftragen auf ein Substrat mit einer UV-Lampe bestrahlt. Da die UV-härtenden Tinten unabhängig von der Verdampfung ihrer Lösungsmittel aushärten, können die bedruckten Substrate wesentlich früher weiterbearbeitet werden und ermöglichen damit erheblich kürzere Prozesszeiten bzw. deutlich schnelle Prozesse.

Ein weiterer Vorteil von UV-härtenden Tinten ist die einfachere Handhabung. Im Gegensatz zu verdampfend trocknenden wasser- oder lösemittelbasierten Tinten trocknen UV-härtende Tinten nicht im Druckkopf ein und ersparen somit aufwendige Reinigungen des Kopfes. Auch haften UV-härtende Tinten gut auf sehr verschiedenen Materialien u.a. auch auf Kunststoffen. Daher hat die Verwendung von W-härtenden Tinten mittlerweile einen festen Platz in der Inkjet-Technologie.

Übliche W-härtende Tintenformulierungen basieren auf Acrylaten. Sie können mit W-Licht nur dann zur Farbschicht gehärtet werden, wenn in den Formulierungen Fotoinitiatoren enthalten sind. Diese Fotoinitiatoren werden durch W-Licht angeregt und zerfallen in Radikale, welche die Polymerisationreaktionen der Acrylat-Oligomere auslösen. Dabei bilden sich hauptsächlich Radikale mit definierter Struktur, die auch zu definierten Polymeren weiter reagieren. Es muss jedoch sichergestellt sein, dass die Fotoinitiatoren nicht in Schattenzonen liegen, da dort mangels W-Strahlung keine Anregung erfolgt und die Bildung von kettenstartenden Radikalen unterbleibt.

Ein weiterer Nachteil der W-Technologie ist, dass immer Restanteile der Reaktionsprodukte undefiniert bleiben, da neben den Hauptreaktionen Nebenreaktionen stattfinden, die zu einer Vielzahl unterschiedlicher Produkte führen. Diese Nebenprodukte sind sehr vielfältig und liegen teilweise nur in geringen Mengen im ppm-Bereich vor, so dass sie analytisch schwer zu identifizieren sind.

Darüber hinaus können direkt beim Zerfall des Fotoinitiators Spalt- oder Nebenprodukte entstehen, die aus den Tinten- bzw. Farbschichten migrieren. Eine Migration von undefinierten Nebenprodukten ist für einige Anwendungen beispielsweise im Bereich der Lebensmittelverpackungen jedoch nicht akzeptabel. Erschwerend kommt hinzu, dass je nach Prozessparameter wie Lichtintensität, Geschwindigkeit und Schichtdicke die Anteile an den erwähnten Nebenprodukten stark variieren können.

Ein weiterer Nachteil ist, dass auf porösen Substraten die UV-härtende Tinte wegschlagen kann, d.h. vom Substrat aufgesogen werden kann. Dadurch entzieht sie sich der Bestrahlung mit UV-Licht, was zu einer unvollständigen Reaktion der Acrylat-Oligomere führt. Durch die unvollständige Reaktion entstehen andere Nebenprodukte als bei einer vollständigen Aushärtung. In der Regel verursachen die Nebenprodukte unerwünschte Gerüche. Je weniger die Schicht gehärtet ist, desto intensiver ist im Allgemeinen der Geruch.

Die unerwünschten Nebenprodukte sind üblicherweise nicht identifizierbar. Sie sind somit einer Einstufung entsprechend den Vorgaben für die Verwendung von Druckfarben im Lebensmittelbereich nicht zugänglich. Da die Beurteilung der Gefährdung nicht möglich ist, werden UV-härtende Tinten zur Bedruckung von Lebensmittelverpackungen und in anderen gesundheitskritischen Bereichen wie beispielsweise in der Bedruckung von Spielzeug bisher nur sehr selten eingesetzt.

Um die Vorteile der UV-härtenden Tinten dennoch zu nutzen, sind Fotoinitiatoren bekannt, die aufgrund ihrer Struktur ein verringertes Migrationspotential aufweisen. Das wird erreicht, indem aus den ursprünglich kleineren Fotoinitiator-Molekülen durch Derivatisierung mit sperrigen Substituenten größere Moleküle mit geringer Migrationstendenz hergestellt werden. Allerdings verhindert man dadurch zwar die schnelle Migration, nicht aber die Tendenz zur Bildung von unerwünschten Nebenprodukten an sich. Zudem wird durch die höhere Molmasse des Fotoinitiators seine Reaktivität reduziert.

Dies führt zu einer in vielen Bereichen inakzeptabeln Verringerung der Prozessgeschwindigkeit. Die derivatisierten Fotoinitiatoren werden deshalb nur als für den indirekten Lebensmittelkontakt geeignet eingestuft.

Aufgabe der vorliegenden Erfindung ist es daher Mittel und Verfahren zur Verfügung zu stellen, die unter Beibehaltung der technischen Vorteile die Herstellung verbesserter Farbschichten zur Bedruckung von Substraten erlauben, insbesondere die Herstellung gesundheitlich unbedenklicher Farbschichten mit Hilfe der Inkjet-Technologie, die beispielsweise auch zur Bedruckung von Lebensmittelverpackungen und von Kinderspielzeug eingesetzt werden können.

Die Aufgabe wird gelöst durch elektronenhärtbare Tinten gemäß Anspruch 1 und deren Verwendung gemäß Anspruch 6 sowie Druckverfahren gemäß Anspruch 7. Weitere Ausführungsformen werden in den Unteransprüchen und der Beschreibung offenbart.

Der Einsatz der Elektronenstrahlhärtung ist bisher im Bereich des Siebdrucks und des Offsetdrucks bekannt. Die dort eingesetzten Druckfarben müssen im Gegensatz zu Inkjet-Tinten jedoch völlig andere Eigenschaften aufweisen. Um durch die Düsen des eingesetzten Inkjet-Druckers auf ein Substrat aufgebracht werden zu können, müssen Inkjet-Tinten unter anderem niedrige Viskositäten und eine feine Korngrößenverteilung der Pigment- und Farbstoffpartikel aufweisen. Die Teilchengrößen der in den erfindungsgemäßen Tinten eingesetzten Pigmente bewegen sich im Bereich von 10 bis 1000 nm. Bevorzugt werden Teilchengrößen von 50 bis 600 nm eingesetzt, um die Stabilität und die gewünschte Farbstärke erreichen zu können.

Im Gegensatz zu anderen Drucktechnologien wie Offset- oder Siebdruck, in denen in Regel hochviskose, pastöse Farben eingesetzt werden, kann bei den niedrigviskosen Inkjet-Tinten nicht ohne Weiters auf höhermolekulare Komponenten zurückgegriffen werden, um das Risiko der Migration zu verringern. So müssen einer Tinte mit erhöhtem Anteil höhermolekularer Komponenten größere Mengen an Reaktivverdünner zugegeben werden, um die notwendige Viskosität zu erreichen. Ein hoher Anteil an Reaktivverdünnern jedoch würde bei einer UV-Härtung zu einem deutlich erhöhten Anteil migrationsfähiger Komponenten führen. Um die Migration zu unterbinden, muss bei der erfindungsgemäßen Elektronenstrahlhärtung die Einbindung aller Monomere durch den Polymerisationsmechanismus erfolgen. Dies erfordert eine exakte Abstimmung von Strahlungsdosis, Reaktivität und Viskosität der erfindungsgemäßen Inkjet-Tinte.

Die erfindungsgemäßen Tinten weisen einen hohen Anteil an Reaktivverdünnern und einen geringen Anteil an Prepolymeren oder Oligomeren auf. Zudem sind sie frei von Fotoinitiatoren. Unter dem Begriff Reaktivverdünner werden im Folgenden Verdünnungs- und Lösemittel verstanden, die bei der Filmbildung bzw. Aushärtung durch chemische Reaktion Bestandteil des Bindemittels werden. Erfindungsgemäße Reaktivverdünner sind Dipropylenglykoldiacrylat, Tripropylenglykoldiacrylat, Tetrahydrofurfurylacrylat, Isobornylacrylat, Isodecylacrylat, Ethylenethylacrylat EEA,Hexandioldiarcylat, Tricyclodecandimethanol-diacrylat, propoxyliertes Neopentylglykoldiacrylat und propoxylyliertes Trimethylolpropantriacrylat. Erfindungsgemäß besonders bevorzugt sind Dipropylenglykoldiacrylat, 1,6-Hexandioldiarcylat, Tricyclodecandimethanol-diacrylat, propoxyliertes Neopentylglykoldiacrylat und propoxyliertes Trimethylolpropantriacrylat. Erfindungsgemäß enthalten die Tinten weiterhin zumindest zwei Lösungsmittel. Um die erforderlichen Schichtdicken der ausgehärteten Tintenschicht von unter 30 *µ*m, im Verpackungsdruck sogar unter 10 *µ*m, einzuhalten, können die erfindungsgemäßen Tinten Reaktivverdünner in geeigneten Lösungsmitteln enthalten. Dabei weisen die erfindungsgemäßen Tinten dann 5 bis 25 Gew.-% Reaktivverdünner und zusätzlich 25 bis 84 Gew.-%., bevorzugt von 40 bis 70 Gew.-%, besonders bevorzugt von 50 bis 60 Gew.-%, eines Lösemittelsgemisches auf. Bei der Aushärtung der Tintenschichten mittels Elektronenstrahlung fällt im Gegensatz zu einer Aushärtung mittels UV-Strahlung keine Wärme oder Infrarot-Strahlung an, die zur Verdampfung oder Ablüftung der Lösungsmittel genutzt werden kann. Die Ablüftung der in den Tinten verwendeten Lösungsmittel muss jedoch innerhalb einer akzeptablen Zeit und dementsprechend einer akzeptablen Streckenlänge bei Inline-Bedruckungen in Fertigungsprozessen möglich sein. Weiterhin müssen die eingesetzten Lösungsmittel mit den anderen Bestandteilen der Tinten insbesondere mit den Pigmentdispersionen verträglich sein. Die erfindungsgemäß geeigneten Lösungsmittel weisen daher Eigenschaften auf, die sich durch die Werte ihrer Verdunstungszahlen VD, ihrer Siedepunkte und ihrer Dielektrizitätskonstanten oder relativen Permittivitätszahlen εᵣ angeben lassen. Die geeigneten Lösungsmittel haben eine Verdunstungszahl im Bereich von 3 bis 5000, bevorzugt 3 bis 500, besonders bevorzugt 3 bis 50. Die Verdunstungszahl VD ist das Verhältnis zwischen der Verdunstungszeit des flüssigen Stoffes oder der flüssigen Zubereitung und der Verdunstungszeit der Vergleichsflüssigkeit Diethylether jeweils bei Raumtemperatur und Normaldruck. Die Verdunstungszeit ist dabei die Zeit, die die Flüssigkeit braucht, um unterhalb ihres Siedepunkts zu verdunsten.

Weiterhin haben die erfindungsgemäß eingesetzten Lösungsmittel einen Siedepunkt im Bereich von 50 bis 300 °C, bevorzugt 75 bis 200 °C, besonders bevorzugt 80 bis 100 °C. Zusätzlich weisen sie Dielektrizitätskonstanten εᵣ im Bereich von 5 bis 20, bevorzugt 5 bis 15, besonders bevorzugt 5 bis 13, auf.

Die Open-Nozzle-Time der erfindungsgemäßen Tinte ist größer als 1 Minute, bevorzugt größer als 15 Minuten. Die Open-Nozzle-Time ist dabei die Zeitspanne, in der die Tinte bei Druckkopf-Inaktivität ihre der Druckkopfspezifikation entsprechende Viskosität beibehält. Bei Druckkopf-Inaktivität kann es durch Verdunsten der Lösungsmittel zu einer Erhöhung der Viskosität kommen, so dass bei neuter Druckkopfaktivität die Tinte nicht mehr auf Anhieb ausgestoßen werden kann. Erfindungsgemäß werden zumindest zwei Lösungsmittel mit unterschiedlichen Verdunstungszahlen kombiniert, wobei einer der beiden Werte um einen Faktor 2 bis 10 größer ist als der andere. Die beiden Lösungsmittel werden dabei in einem Mengenverhältnis von 0,25 : 1 bis 1 : 2,5 eingesetzt. Erfindungsgemäß werden Methylisobutylketon, Cyclohexanon, Propylenglykolmonomethylether, Propylenglykolmonoethylether, Propylenglykolmonon-butylether, Ethylenglykolmonomethylether, Ethylenglykolmonoethylether, Ethylenglycolmono-n-butylether, Dipropylenglykolmonomethylether, Dipropylenglykoldimethylether, Dipropylenglykolmono-n-butylether, Diethylenglykolmonomethylether, Diethylenglycolmono-n-butylether, Tripropylenglykolmonomethylether, Butoxyethylacetat, Methoxypropylacetat, Ethylglykolacetat, Butyldiglykolacetat, Ethyldiglycolacetat, Dipropylenglykolmethyletheracetat, Ethylacetat, n-Propylacetat, iso-Propylacetat, n-Butylacetat, Methyllactat, Ethyllactat und Ethylenglykoldiacetat verwendet. Weiterhin enthalten die erfindungsgemäßen Tinten 10 bis 40 Gew.-%, bevorzugt 25 bis 35 Gew.-%, besonders bevorzugt 20 bis 30 Gew.-% Oligomere oder Prepolymere bezogen auf das Gesamtgewicht der Tinte. Erfindungsgemäße Oligomere sind aliphatische und aromatische Urethanacrylate, Polyetheracrylate und Epoxyacrylate, wobei die Acrylate mono- oder polyfunktionell sind z.B. di-, tri- bis zu hexa- und decafunktionell. Erfindungsgemäß bevorzugt sind aliphatische und aromatische Urethanacrylate.

Die erfindungsgemäßen Tinten enthalten 1 bis 15 Gew.-% Pigmente bezogen auf das Gesamtgewicht der Tinte. Geeignete Pigmente sind beispielsweise Pigment Yellow 213, PY 151, PY 93, PY 83, Pigment Red 122, PR 168, PR 254, PR 179, Pigment Red 166, Pigment Red 48:2, Pigment Violet 19, Pigment Blue 15:1, Pigment Blue 15:3, Pigment Blue 15:4, Pigment Green 7, Pigment Green 36, Pigment Black 7 oder Pigment White 6. Die Teilchengrößen der eingesetzten Pigmente bewegen sich im Bereich von 10 bis 1000 nm. Erfindungsgemäß bevorzugt werden Pigmente mit Teilchengrößen von 50 bis 600 nm eingesetzt, um die Stabilität und die gewünschte Farbstärke erreichen zu können.

Zur Einstellung der Eigenschaften können den Tinten weitere Additive zugesetzt werden wie beispielsweise Dispergieradditive, Netzmittel, Polymerisationsinhibitoren, Entschäumer und UV-Absorber. Im Gegensatz zu den üblichen UV-härtenden Tinten können in den erfindungsgemäßen Tinten auch UV-Absorber zur Verbesserung der Lichtstabilität des ausgehärteten Films eingesetzt werden. Die erfindungsgemäßen Tinten können bis zu 5 Gew.-% Additive bezogen auf das Gesamtgewicht der Formulierung enthalten.

Da die erfindungsgemäßen Tinten keine Fotoinitiatoren aufweisen, können sie insbesondere zur Bedruckung von Substraten und Materialien verwendet werden, die in gesundheitskritischen Bereichen eingesetzt werden. Beispiele sind die Bedruckung von Lebensmittelverpackungen und Kinderspielzeug. Die erfindungsgemäßen Tinten können insbesondere in Inkjet-Druckverfahren zur Bedruckung von Kunststoffen und Kunststofffolien verwendet werden wie zum Beispiel zur Bedruckung von Polyethylen (PE), Polypropylen (PP), Polyvinylchlorid (PVC), Acrylnitril-Butadien-Styrol-Copolymerisat (ABS) oder Polyethylenterephthalat (PET).

Die oben genannte Aufgabe wird weiterhin durch ein Verfahren zur Herstellung von Farbschichten auf Substraten bzw. auf Substratoberflächen gelöst, das die folgenden Schritte aufweist. In einem Schritt a) werden zunächst eine oder mehrere der erfindungsgemäßen Tinten auf die Substratoberfläche mittels Inkjet-Technologie appliziert. In einem Schritt b) werden anschließend die aufgebrachten Tinten einer Elektronenstrahlung ausgesetzt und ausgehärtet.

Durch die zur Härtung der Inkjet-Tinten erfindungsgemäß eingesetzte Elektronenstrahlung kann vollständig auf den Einsatz von Fotoinitiatoren verzichtet werden. Die Strahlung wird durch eine Elektronenquelle erzeugt, welche Elektronen mit bestimmter Intensität auf die zu härtende Schicht schießt. Parameter wie Elektronendichte und Elektronengeschwindigkeit, welche die Eindringtiefe der Strahlung in das Substrat bestimmen, lassen sich an den gewünschten Prozess anpassen.

Elektronen sind energiereicher als W-Licht und somit in der Lage die Acrylat-Bindungen in den erfindungsgemäßen Tinten direkt zu spalten. Die Härtung erfolgt ausschließlich über die Anregung und die Reaktion der Acrylat-Bindungen. Da die Reaktionsprodukte der Acrylate definiert sind, kommt es bei der Elektronenstrahlhärtung nicht zur Bildung unerwünschter, migrationsfähiger Nebenprodukte. Die Reaktionskinetik der erfindungsgemäßen Aushärtungsprozesse unterscheidet sich deutlich von der Kinetik UV-härtender Systeme, da durch die Spaltung der Fotoinitiatoren andere Radikale erzeugt werden als bei der erfindungsgemäß eingesetzten Elektronenstrahlhärtung.

Ein weiterer Vorteil der Elektronenstrahlhärtung ist, dass die Strahlung einige Mikrometer in das Substrat eindringen kann. Das heißt, auch Tinte, die in das Substrat eingesogen ist, kann vollständig ausgehärtet werden.

In Abhängigkeit von der Dosis, dem wichtigsten Parameter bei der Elektronenstrahlhärtung, dringt die Strahlung einige Mikrometer in die Oberfläche des bestrahlten Substrats ein. Übliche Dosiswerte liegen dabei zwischen 10 und 200 kGy, bevorzugt bei 50 bis 100 kGy. Die Werte werden hier in Gray (Gy) angegeben. Diese Größe gibt die durch ionisierende Strahlung verursachte Energiedosis an und beschreibt die pro Masse absorbierte Energie. Sie ist der Quotient aus der aufgenommenen Energie in Joule und der Masse des Körpers in kg: 1 Gy = 1 J/kg.

Die Eindringtiefe hängt dabei vom Substrat bzw. der Beschichtung ab. Sie kann bis zu 100 *µ*m betragen. Im Gegensatz zur UV-Härtung, wo auf porösen Untergründen bzw. Substraten sich die Beschichtung durch Wegschlagen dem Einfluss des Lichts zur Härtung entzieht, können durch erfindungsgemäß eingesetzte Elektronenstrahlung die in der Oberfläche des Substrats befindlichen reaktiven Zentren ebenfalls Radikale bilden und die Lackschicht härten.

Das erfindungsgemäße Druckverfahren ist somit nicht nur zur Bedruckung von Substraten mit unporösen Oberflächen wie zum Beispiel Kunststoff, Glas, Metall oder Keramik geeignet sondern auch zur Bedruckung von porösen und/oder offenzelligen Substraten bzw. Oberflächen. Es werden Farbschichten mit gleicher Qualität erhalten, ohne dass die Tinten verändert werden müssen. Geeignete poröse und/oder offenzellige Materialien oder Substrate sind zum Beispiel offenzellige Schäume, offenporige Keramiken und Gläser, Holz, gestrichene und ungestrichene Papiere wie Zeitungspapiere oder Büropapiere. Geeignete unporöse Materialien oder Substrate sind zum Beispiel die oben schon erwähnten Folien aus Kunststoffen wie Polyethylen (PE), Polypropylen (PP), Polyvinylchlorid (PVC), Acrylnitril-Butadien-Styrol-Copolymerisat (ABS) oder Polyethylenterephthalat (PET).

Durch die hohe Eindringtiefe der Elektronenstrahlung wird die Aushärtung der Tintenschicht auch durch Schattenbildung auf der Oberfläche nicht behindert. Das erfindungsgemäße Verfahren ist daher auch zur Bedruckung von strukturierten Oberflächen wie zum Beispiel genarbten oder reliefartigen Oberflächen oder zur Bedruckung von dreidimensional geformten Oberflächen wie zum Beispiel gewölbten Oberflächen geeignet.

Die Tinten können erfindungsgemäß im Multi-Pass- oder im Single-Pass-Verfahren aufgebracht werden. Im Multi-Pass-Verfahren wird jede zu bedruckende Zeile mehrfach von der Druckeinheit überstrichen, wobei ein Muster oder Bild in mehreren Schritten aufgebaut wird. Der Vorteil dieser Technik ist die hohe Bildqualität, Nachteil die langsame Geschwindigkeit. In industriellen Prozessen wird das Single-Pass-Verfahren bevorzugt eingesetzt, bei dem jede zu bedruckende Zeile nur einmal von der Druckeinheit überstrichen wird. So lassen sich hohe Druckgeschwindigkeiten von über 100 m/min erreichen.

Durch die Auswahl geeigneter Reaktivverdünner und Lösungsmittel kann die Kinetik der Aushärtungsreaktion der Tinte dem Verfahren angepasst werden. Dabei ist zu beachten, dass im Single-Pass-Verfahren die Oberfläche lediglich einmal bestrahlt wird und die Druckschicht danach ihren Endzustand erreicht haben muss.

Bei den üblichen W-härtenden Druckverfahren muss die Aushärtung der aufgebrachten Tintenschicht spätestens 5 bis 10 Sekunden nach ihrem Auftrag erfolgt sein, um ein Verlaufen der Tinte zu unterbinden oder zu minimieren. Bei porösen oder saugenden Substraten muss die Aushärtung deutlich schneller erfolgen als bei unporösen Substraten, um ein Wegschlagen der Tinten zu vermeiden. Durch die hohe Eindringtiefe der erfindungsgemäß eingesetzten Elektronenstrahlung können die Tinten jedoch auch in tieferen Schichten des Substrats ausgehärtet werden, so dass auch bei einer verzögerten Aushärtung, beispielsweise um 15 Sekunden, bei Schattenbildung auf strukturierten Oberflächen oder beim Wegschlagen der Tinte auf saugenden Substraten noch gute Ergebnisse erzielt werden.

Die erfindungsgemäße Härtung kann mit Geschwindigkeiten bis zu 100 m pro Minute erfolgen, so dass übliche Druckgeschwindigkeiten von handelsüblichen Inkjetdruckern abgedeckt werden. Das erfindungsgemäße Verfahren ist auch zum inline-Einsatz in Fertigungsprozessen geeignet. Insbesondere im Single-Pass-Verfahren können die für den Inline-Einsatz erforderlichen Druckgeschwindigkeiten von bis zu 100 m/min realisiert werden.

In einer bevorzugten Ausführungsform des erfindungsgemäßen Druckverfahrens wird das zu bedruckende Substrat durch ein Transportsystem wie zum Beispiel ein Transportband, ein Schlitten oder eine Rolle-zu-Rolle-System der Druckeinheit zugeführt. In der Druckeinheit werden die erfindungsgenäßen Tinten mittels Inkjet-Verfahren appliziert. Nach dem Aufbringen der Inkjet-Tinten wird das Substrat durch das Transportsystem einer Strahlungsquelle zugeführt und die aufgetragenen Tinten durch Einwirken von Elektronenstrahlung ausgehärtet. Die Strecke, die das Substrat zwischen Druckeinheit und Strahlungsquelle zurücklegt, dient dabei als Ablüftungszone, in der die in den Tinten enthaltenen Lösungsmittel verdampfen. Aus der Streckenlänge und Vorschubgeschwindigkeit berechnet sich die Zeitspanne, die zur Verdampfung der eingesetzten Lösungsmittel zur Verfügung steht. Die erfindungsgemäßen Druckverfahren werden mit Vorschubgeschwindigkeiten von 1 bis über 100 m/min, bevorzugt von 20 bis 100 m/min, gefahren. Der Abstand zwischen Druckeinheit und Strahlungsquelle, welcher der Strecke entspricht, die das Substrat zwischen Applikation und Aushärtung der Tinten zurücklegt, liegt zwischen unter 0,01 bis 2 m, bevorzugt zwischen 0,01 bis 1 m. Entsprechend ergibt sich eine Ablüftzeit 0,001 bis 10 s, bevorzugt 0,01 bis 5 s.

In einer weiteren bevorzugten Ausführungsform des erfindungsgemäßen Verfahrens ist dem Schritt a) der Applikation der Tinten ein Schritt vorgeschaltet, in dem das Substrat zunächst mittels einer ersten Druckeinheit mit zumindest einer erfindungsgemäßen, weißen Tinte bedruckt wird. Erst nach der Applikation der weißen Tinte oder Tinten werden im Nass-in-Nass-Verfahren, also ohne Aushärten der ersten, weißen Tintenschicht, weitere Tinten appliziert, welche das eigentliche Bild oder Muster ergeben. Daran anschließend werden alle aufgetragenen Tinten ausgehärtet.

Die Strecke, die das Substrat zwischen den beiden Druckeinheiten zurücklegt, dient dabei ebenfalls als Ablüftungszone, in der die Lösungsmittel der zuerst aufgetragenen, weißen Tinten abdampfen. Der Abstand zwischen der ersten und der zweiten Druckeinheit liegt dabei im Bereich von unter 0,01 bis 2 m, bevorzugt 0,01 bis 1 m. Daraus ergibt sich eine Ablüftzeit 0,001 bis 10 s, bevorzugt 0,01 bis 5 s.

In den erfindungsgemäßen Verfahren können als Druckeinheiten Druckköpfe eingesetzt werden wie üblicherweise im industriellen Injetdruck verwendet werden. Typische Parameter wie beispielsweise die Viskosität der Tinten, Tropfengeschwindigkeit, Druckkopftemperatur, Steuerspannung und Steuerpulsweite, können sich dabei je nach Spezifikation des Druckkopfs unterscheiden. Die für den Einsatz im erfindungsgemäßen Verfahren geeigneten Druckköpfe weisen eine Tropfengröße im Bereich von 4 bis 80 *µ*m, eine Tropfenfrequenz im Bereich von 20 bis 40 kHz und eine Nozzle-Open-Time von größer 1 Minute, bevorzugt größer 15 Minuten, auf.

### Beispiele

### Tinte

| **Substanz** | **Menge in Gewichtsanteilen** |
|---|---|
| Pigment | 4 |
| Reaktiwerdünner | 24 |
| Oligomere | 20,5 |
| Lösungsmittelgemisch | 50 |
| Polymerisationsinhibitor | 0,2 |
| Netzmittel | 0,1 |
| Polymeres Dispergieradditiv | 1,2 |

### Druckverfahren

Auf einer Technikumsanlage mit Single-Pass-4-Farb-Inkjetdruckeinheit wurden die erfindungsgemäßen Tinten gedruckt. Dabei wurde ohne Weiß und mit Weiß unterdruckt. Die Härtung fand auf einer separaten Anlage statt. Die Härtung erfolgte je nach Geschwindigkeit des Druckes zwischen 2 und 5 Sekunden nach der Bedruckung.

| | |
|---|---|
| Substrat: | Papier Naturweiß |
| | Polycarbonat-Folie |
| | Polypropylen-Folie, 50 micron |
| Druckgeschwindigkeit: | 60 m/min |
| Restsauerstoffgehalt: | 5 - 15 ppm |
| Strahlungsdosis: | 50 keV |

Die Muster wurden im 4-Farbdruck mit einem Testmotiv bedruckt und anschließend ausgehärtet. Die erhaltenen Proben zeigten auf allen Medien eine exzellente Haftung, harte Oberflächen und waren geruchlos.

### Vergleich der Emissionen aus beschichteten Substraten

Die Emission aus beschichteten Substraten, die mittels UV-Strahlung (Probe 1) und mittels Elektronenstrahlung (Probe 2) ausgehärtet wurden, wird durch eine Screening-Analyse auf flüchtige organische Verbindungen und mittelbis schwerflüchtige mittels Thermoextraktion und anschließender Thermodesorption GC/MS bestimmt. Dazu wurden die flüchtigen Komponenten der Probe (Einwaage ca. 0,2 g) bei 100 °C für 20 Minuten extrahiert und die flüchtigen Komponenten auf einem mit Adsorptionsmaterial gefüllten Röhrchen angereichert. Anschließend wurde das Adsorptionsröhrchen desorbiert, die Analyten gaschromatisch aufgetrennt und massenspektrometrisch identifiziert.

Folgende Verbindungen wurden durch Vergleich mit Spektrenbibliotheken identifiziert und als d-Toluolequivalent (d-TE) quantifiziert:

| | Probe 1 | Probe 2 |
|---|---|---|
| Reaktionskomponente | Emission in mg pro kg Substrat | Emission in mg pro kg Substrat |
| Isobornylacrylat | 14 | 0 |
| Dipropylendiglykoldiacrylat | 15 | 0 |
| Tricyclodecandimethanol-diacrylat | 5 | 0 |

## Patentansprüche

1. Elektronenstrahlhärtbare Inkjet-Tinte enthaltend
- 10 bis 40 Ges.-% Oligomere ausgewählt aus der Gruppe enthaltend aliphatische und aromatische Urethanacrylate, Polyetheracrylate und Epoxyacrylate, wobei die Acrylate mono- oder polyfunktionell sind,
- 5 bis 25 Ges.-% Reaktivverdünner ausgewählt aus der Gruppe enthaltend Dipropylenglykoldiacrylat, Tripropylenglykoldiacrylat, Tetrahydrofurfurylacrylat, Isobornylacrylat und Isodecylacrylat, Ethylenethylacrylat, Hexandioldiarcylat, Tricyclodecandimethanol-diacrylat, propoxyliertes Neopentylglykoldiacrylat und proxylyliertes Trimethylolpropantriacrylat,
- 25 bis 84 Gew.-% eines Lösemittelgemisches aus zumindest zwei Lösungsmitteln ausgewählt aus der Gruppe enthaltend Methylisobutylketon, Cyclohexanon, Propylenglykolmonomethylether, Propylenglykolmonoethylether, Propylenglykolmonon-butylether, Ethylenglykolmonomethylether, Ethylenglykolmonoethylether, Ethylenglycolmono-n-butylether, Dipropylenglykolmonomethylether, Dipropylenglykoldimethylether, Dipropylenglykolmono-n-butylether, Diethylenglykolmonomethylether, Diethylenglycolmono-n-butylether, Tripropylenglykolmonomethylether, Butoxyethylacetat, Methoxypropylacetat, Ethylglykolacetat, Butyldiglykolacetat, Ethyldiglycolacetat, Dipropylenglykolmethyletherazetat, Ethylacetat, n-Propylacetat, iso-Propylacetat, n-Butylacetat, Methyllactat, Ethyllactat und Ethylenglykoldiacetat, wobei die Lösungsmittel Siedepunkte von 50 bis 300 °C, Dielektrizitätskonstanten von 5 bis 20 und Verdunstungszahlen von 3 bis 5000 aufweisen und wobei sich die Verdunstungszahlen von zumindest zwei der Lösungsmitten um einen Faktor 2 bis 10 unterscheiden, und
- 1 bis 15 Gew.-% Pigmente bezogen auf das Gesamtgewicht der Tinte,
wobei die Tinte frei von Fotoinitiatoren ist.

2. Inkjet-Tinte nach Anspruch 1, **dadurch gekennzeichnet, dass** die Tinte die beiden Lösungsmittel in einem Mengenverhältnis von 0,25 : 1 bis 1 :2,5 aufweist.

3. Inkjet-Tinte nach Anspruch 1 oder 2, **dadurch gekennzeichnet, dass** die Oligomere ausgewählt sind aus der Gruppe enthaltend aliphatische und aromatische Urethanacrylate, wobei die Acrylate mono- oder polyfunktionell sind.

4. Inkjet-Tinte nach einen der voranstehenden Ansprüche, **dadurch gekennzeichnet, dass** die Reaktivverdünner ausgewählt sind aus der Gruppe enthaltend Dipropy-englykoldiacrylat, Hexandioldiarcylat, Tricyclodecandimethanol-diacrylat, propoxyliertes Neopentylglykoldiacrylat und proxylyliertes Trimethylolpropantriacrylat.

5. Inkjet-Tinte nach einem der voranstehenden Ansprüche, **dadurch gekennzeichnet, dass** die Pigmente Teilchengrößen im Bereich von 10 bis 1000 nm, bevorzugt im Bereich von 50 bis 600 nm, aufweisen.

6. Verwendung der Tinte nach einem der Ansprüche 1 bis 5 zur Bedruckung von Lebensmittelverpackungen und Kinderspielzeugen.

7. Verfahren zur Herstellung von Farbschichten auf Substratoberflächen, **dadurch gekennzeichnet, dass**
a) eine oder mehrere Inkjet-Tinten nach einem der Ansprüche 1 bis 5 auf die Substratoberfläche mittels Inkjet-Technologie appliziert werdenund
b) die aufgebrachte Tinte oder Tinten einer Elektronenstrahlung mit einer Dosis im Bereich von 10 bis 200 kGy ausgesetzt werden,
wobei die Zeitspanne zwischen der Applikation der Tinten in Schritt a) und dem Aushärten der Tinten in Schritt b) 0,001 bis 10 Sekunden beträgt.

8. Verfahren nach Anspruch 7 , **dadurch gekennzeichnet, dass** die Tinten im Single-Pass-Verfahren oder im Multi-Pass-Verfahren aufgebracht werden.

9. Verfahren nach einem der Ansprüche 7 oder 8, **dadurch gekennzeichnet, dass** die eingesetzten Substrate dreidimensional strukturierte Oberflächen aufweisen.

10. Verfahren nach einem der Ansprüche 7 bis 9, dadurch gekenntzeichnet, dass die eingesetzten Substrate poröse, offenzellige oder saugende Materialien sind.

11. Verfahren nach einem der Ansprüche 7 bis 10, **dadurch gekennzeichnet, dass** die Zeitspanne zwischen der Applikation der Tinten in Schritt a) und dem Aushärten der Tinten in Schritt b) 0,01 bis 5 Sekunden beträgt.

12. Verfahren nach einem der Ansprüche 7 bis 11, **dadurch gekennzeichnet, dass** vor der Applikation der Tinten im Schritt a) eine erste Schicht umfassend zumindest eine weiße Tinte appliziert wird.

13. Verfahren nach Anspruch 12, **dadurch gekennzeichnet, dass** die Zeitspanne zwischen der Applikation der weißen Tinten und der Applikation der Tinten in Schritt a) 0,001 bis 10 Sekunden beträgt.

## Claims

1. An electron beam curable inkjet ink comprising
- 10 to 40 % in weight of oligomers selected among the group comprising aliphatic and aromatic urethane acrylates, polyether acrylates and epoxy acrylates, Wherein the acrylates are mono- or polyfunctional,
- 5 to 25% in weight of reactive thinners selected among the group containing dipropylene glycol diacrylate, tripropylene glycol diacrylate, tetrahydrofurfuryl acrylate, isobornyl acrylate and isodecyl acrylate, ethylene ethyl acrylate,hexandiol diacrylate, tricyclodecane dimethanol diacrylate, propoxylated neopentyl glycol diacrylate and proxylylated trimethylolpropane triacrylate,
- 25 to 84% in weight of a solvent mixture made of at least two solvent selected among the group containing methyl isobutyl ketone, cyclohexanone, propylene glycol monomethyl ether, propylene glycol monoethyl ether, propylene glycol mono-n-butyl ether, ethylene glycol monomethylether, ethylene glycol monoethyl ether, ethylene glycol mano-n-butyl ether, dipropylene glycol monomethyl ether, dipropylene glycol dimethyl ether, dipropylene glycol mono-n-butylether, diethylene glycol monomethyl ether, diethylene glycol mono-n-butyl ether, tripropylene glycol monomethyl ether, butoxy ethyl acetate, methoxy propyl acetate, ethyl glycol acetate, butyl diglycol acetate, ethyl diglycol acetate, dipropylene glycol methyl ether acetate, ethyl acetate, n-propyl acetate, iso-propyl acetate, n-butyl acetate, methyl lactate, ethyl lactate and ethylene glycol diacetate,wherein the evaporation numbers of at least two of the solvents differ by a factor of 2 to 10, and
- 1 to 15% in weight of pigments related to the total weight of the ink,
whereas the ink is free from photoinitiators.

2. The inkjet ink according to claim 1, **characterized in that** the ink contains the two solvents in an amount ratio of 0.25:1 to 1:2.5.

3. The inkjet ink according to claim 1 or 2, **characterized in that** the oligomers are selected among the group comprising aliphatic and aromatic urethane acrylates, wherein the acrylates are mono- or polyfunctional.

4. An inkjet ink according to any of the previous claims **characterized in that** the reactive diluents are selected from the group comprising dipropylene glycol diacrylate, hexanediol diacrylate, tricyclodecane dimethanol diacrylate, propoxylated neopentyl glycol diacrylate and proxylylated trimethylolpropane triacrylate.

5. An inkjet ink according to any of the previous claims, **characterized in that** the pigments have particle sizes in the range of 10 to 1000 nm, preferably in the range of 50 to 600 nm.

6. The use of the ink according to one of claims 1 to 5 for the printing of food packaging and children's toys.

7. A method for producing colour coats on substrate surfaces, **characterized in that**
a) one or several inkjet inks according to one of claims 1 to 5 are applied on the substrate surface by means of the inkjet technology and
b) the applied ink or inks are exposed to an electron radiation with a dose in the range of 10 to 200 kGy,
wherein the time span between the application of the inks in step a) and the hardening of the inks in step b) ranges from 0.001 to 10 seconds.

8. The method of claim 7, **characterized in that** the inks are applied in a single-pass method or in a multi-pass method.

9. A method according to any of the claims 7 or 8, **characterized in that** the substrates used have three-dimensionally structured surfaces.

10. The method according to any of the claims 7 to 9, **characterized in that** the substrates used are porous, open-cell or absorbent materials.

11. The method according to any of the claims 7 to 10, **characterized in that** the time span between the application of the inks in step a) and the hardening of the inks in step b) ranges from 0,01 to 5 seconds.

12. The method according to any of the claims 7 to 11, **characterized in that** a first coat comprising at least one white ink is applied before the application of the inks in step a).

13. The method according to claim 12, **characterized in that** the time span between the application of the white inks and the application of the inks in step a) ranges from 0.001 to 10 seconds.

## Revendications

1. Encre pour imprimante à jet d'encre durcissable par faisceau d'électrons comprenant
- 10 à 40% en poids d'oligomères choisis parmi le groupe comprenant les acrylates d'uréthane aliphatiques et aromatiques, les polyéther acrylates et les acrylates époxydes, dans lequel les acrylates sont mono- ou polyfonctionnels,
- 5 à 25% en poids de diluants réactifs sélectionnés dans le groupe contenant le dipropylène glycol diacrylate, le tripropylène glycol diacrylate, le tétrahydrofurfuryl acrylate, l'isobornyl acrylate et l'isodécyl acrylate, l'éthylène éthyl acrylate, l'hexandiol diacrylate, le tricyclodécane diméthanol diacrylate, le néopentyl glycol diacrylate propoxylé et le triméthylolpropane triacrylate propoxylé,
- 25 à 84% en poids d'un mélange de solvants constitué d'au moins deux solvants choisis parmi le groupe contenant la méthylisobutylcétone, la cyclchexanone, le propylène glycol monométhyl éther, le propylène glycol monoéthyl éther, le propylène glycol mono-n-butyl éther, l'éthylène glycol monométhyl éther, l'éthylène glycol monoéthyl éther, l'éthylène glycol mono-n-butyl éther, le dipropylène glycol monométhyl éther, le dipropylène glycol-diméthyl éther, le dipropylène glycol mono-n-butyléther, le diéthylène glycol monométhyl éther, le diéthylène - glycol mono-n-butyl éther, le tripropylène glycol monométhyl éther, le butoxy éthyl acétate, le méthoxy propyl acétate, l'éthyl glycol acétate, le butyl diglycol acétate, l'éthyl diglycol acétate, le dipropylène glycol méthyl éther acétate, l'éthyl acétate, n-propyl acétate, l'iso-propyl acétate, le n-butyl acétate, le méthyl lactate, l'éthyl lactate et l'éthylène glycol diacétate,dans lequel les nombres d'évaporation d'au moins deux des solvants diffèrent d'un facteur de 2 à 10, et
- 1 à 15% en poids de pigments liés au poids total de l'encre,
alors que l'encre est exempte de photoinitiateurs.

2. Encre pour imprimante à jet d'encre selon la revendication 1, **caractérisée en ce que** l'encre contient les deux solvants dans un rapport de quantité de 0,25:1 à 1:2,5.

3. Encre pour imprimante à jet d'encre selon la revendication 1 ou la revendication 2, **caractérisée en ce que** les oligomères sont choisis parmi le groupe comprenant des acrylates d'uréthane aliphatiques et aromatiques, dans lequel les acrylates sont mono- ou polyfonctionnels.

4. Encre pour imprimante à jet d'encre selon l'une quelconque des revendications précédentes, **caractérisée en ce que** les diluants réactifs sont choisis parmi le groupe comprenant le dipropylène glycol diacrylate, l'hexanediol diacrylate, le tricyclodécane diméthanol diacrylate, le néopentyl glycol diacrylate propoxylé et le triméthylolpropane triacrylate propoxylé.

5. Encre pour imprimante à jet d'encre selon l'une quelconque des revendications précédentes, **caractérisée en ce que** les pigments ont des tailles de particules dans la fourchette de 10 à 1000 nm, de préférence dans la fourchette de 50 à 600 nm.

6. Utilisation de l'encre pour imprimante à jet d'encre selon l'une des revendications 1 à pour l'impression de conditionnements alimentaires et de jouets pour enfants.

7. Procédé pour produire des couches de couleur sur des surfaces de substrat, **caractérisé en ce que**
a) une ou plusieurs encres pour imprimante à jet d'encre selon l'une des revendications 1 à 5 sont appliquées sur la surface de substrat au moyen de la technologie d'impression à jet d'encre et
b) ladite encre ou lesdites encres appliquées sont exposées à un rayonnement d'électrons avec une dose dans la fourchette de 10 à 200 kGy,
dans lequel l'intervalle de temps entre l'application des encres à l'étape a) et le durcissement des encres à l'étape b) varie de 0,001 à 10 secondes.

8. Procédé selon la revendication 7, **caractérisé en ce que** les encres sont appliquées dans un procédé à passe unique ou dans un procédé multi-passe.

9. Procédé selon l'une quelconque des revendications 7 ou 8, **caractérisé en ce que** les substrats utilisés ont des surfaces structurées en trois dimensions.

10. Procédé selon l'une des revendications 7 à 9, **caractérisé en ce que** les substrats utilisés sont des matériaux poreux, à cellules ouvertes ou absorbants.

11. Procédé selon l'une des revendications 7 à 10, **caractérisé en ce que** l'intervalle de temps entre l'application des encres à l'étape a) et le durcissement des encres à l'étape b) varie de 0,01 à 5 secondes.

12. Procédé selon l'une des revendications 7 à 11, **caractérisé en ce qu'**une première couche comprenant au moins une encre blanche est appliquée avant l'application des encres à l'étape a).

13. Procédé selon la revendication 12, **caractérisé en ce que** l'intervalle de temps entre l'application des encres blanches et l'application des encres à l'étape b) varie de 0.001 à 10 secondes.
